# FASCICULE DE BREVET EUROPEEN

(11) **EP 1 860 571 B1**
(45) Date de publication et mention de la délivrance du brevet: **07.04.2010**
(21) Numéro de dépôt: 07108607.8
(22) Date de dépôt: 22.05.2007
(51) Int. Cl.: G06F 13/28

(54) **Contrôleur de DMA, système sur puce comprenant un tel contrôleur de DMA, procédé d'échange de données par l'intermédiaire d'un tel contrôleur de DMA**
DMA-Controller, einen solchen DMA-Controller umfassendes Chipsystem, Verfahren zum Datenaustausch über einen solchen DMA-Controller
DMA controller, system on a chip comprising such a DMA controller, data exchange method using such a DMA controller

(30) Priorité: 24.05.2006 FR 0604673
(43) Date de publication de la demande: 28.11.2007
(73) Titulaire: ST MICROELECTRONICS S.A., 92120 Montrouge (FR)
(72) Inventeur: Couvert, Patrice, 38160 Saint - Marcellin (FR); Cauchy, Xavier, 38190 Laval (FR); Philippe, Anthony, 38000 Grenoble (FR); Ferroussat, Sébastien, 01500 Amberieu en Bugey (FR)
(74) Mandataire: Cabinet Plasseraud

(56) Documents cités:
- US-A1- 2004 010 652
- US-A1- 2005 177 655

## Description

La présente invention concerne les systèmes intégrés sur silicium ou SoC (de l'anglais "System On Chip"), comprenant au moins une unité centrale de traitement ou CPU ("Central Processing Unit") sur laquelle des programmes peuvent s'exécuter, un contrôleur d'accès direct à la mémoire ou contrôleur de DMA ("Direct Memory Access") et une mémoire locale.

La présente invention concerne plus particulièrement de tels systèmes dans lesquels des traitements successifs, par exemple à l'aide d'algorithmes, sont appliqués à des données d'entrée, typiquement des données numériques audio et/ou vidéo. De tels SoC sont par exemple présents dans des appareils électroniques tels qu'un un boîtier décodeur ou "Set-Top-Box", un assistant numérique personnel ou PDA ("Personal Digital Assistant"), un téléphone portable etc.

Les dimensions des coeurs de processeur diminuant alors que leur capacité de traitement augmentent, une tendance est de réaliser un maximum de traitements par des applications logicielles (« software » en anglais), les composants matériels (« hardware » en anglais), par exemple les portes logiques, n'étant utilisés que lorsque des performances de traitement particulièrement élevées, en terme de débit notamment, sont requises.

En effet, l'utilisation d'applications logicielles permet d'utiliser des langages d'algorithmes d'un haut niveau d'abstraction, par exemple le langage « C », ce qui facilite l'étape de conception. De plus, la correction d'erreurs dans des applications logicielles est réalisée simplement, par le chargement d'un nouveau code.

Un compromis entre les avantages des réalisations logicielles et ceux des réalisations matérielles est de combiner les deux aspects au sein d'un même système, nommé alors « firmware », dans lequel le système comporte d'une part des modules comportant des composants matériels et d'autre part des applications logicielles qui sont exécutées sur la CPU, les tâches à réaliser par le système étant réparties entre les modules matériels et les applications logicielles. Lors de l'exécution d'instructions faisant partie de ces applications logicielles, la CPU interagit avec les modules matériels, par exemple par l'envoi de commandes destinées à ces modules. Ces commandes requièrent par exemple la réalisation de traitements successifs par les modules matériels, par exemple de type filtrage numérique, traitement d'images, reconnaissance de parole, codage/ décodage MPEG etc., sur des données numériques reçues en entrée du système.

Les modules matériels des systèmes de type « firmware » reçoivent donc en entrée des données, réalisent des traitements sur ces données reçues, et délivrent en sortie les données traitées.

Il est par ailleurs nécessaire pour optimiser le temps de traitement des applications logicielles que la CPU opère sur des données qui sont stockées dans la mémoire locale du système, à laquelle la CPU accède rapidement. Toutefois dans la plupart des systèmes sur puce, il n'est pas possible de stocker dans la mémoire locale l'ensemble des données qui doivent être traitées par le système sur puce, par exemple l'ensemble des données d'images dans le cas d'un système opérant sur des images. Une, voire plusieurs, mémoires de stockage de masse, (par exemple, des disques), nommées ci-après mémoires externes, stockent ainsi à des adresses respectives dans les mémoires externes, des données destinées à être traitées par la CPU du système sur puce.

Le contrôleur de DMA du système sur puce a pour fonction de transférer des données depuis la mémoire externe vers la mémoire locale, lorsque ces données sont nécessaires au traitement en cours de réalisation par la CPU. De même, le contrôleur de DMA a pour fonction de libérer des ressources de stockage de la mémoire locale en transférant des données depuis la mémoire locale vers la mémoire externe. Les données sont ainsi transférées de mémoire en mémoire, depuis une adresse de source dans une mémoire vers une adresse de destination dans une autre mémoire.

Par ailleurs, dans certains cas, les données à traiter par les modules matériels sont échangées avec les modules matériels par l'intermédiaire d'interfaces spécifiques du processeur, généralement appelées interfaces de « streaming », comprenant chacune un port d'entrée nommé SDI (Streaming Data In) et un port de sortie nommé SDO (streaming Data Out), et un registre associé à chacun de ces ports. Chacun de ces ports consistent généralement en un bus de données et quelques canaux de signaux de synchronisation.

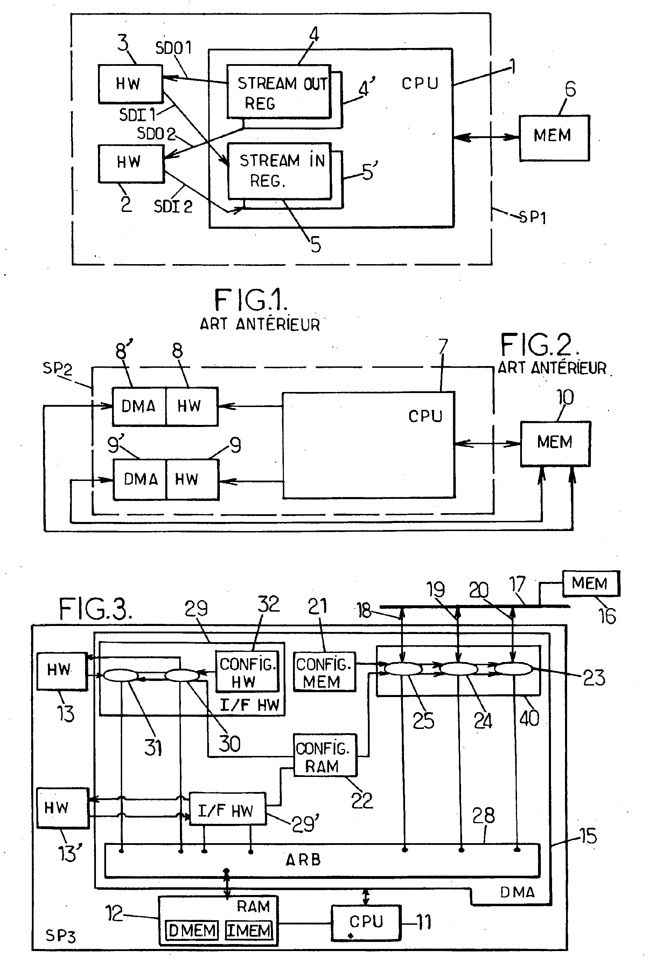

Un telle configuration est représentée en figure 1. Le système sur puce SP1 de type « firmware » comporte une CPU 1, des modules matériels 2 et 3. Le système SP1 a accès sous contrôle de la CPU 1 à une mémoire externe ou locale 6. La CPU 1 comprend un registre 4 (respectivement 5) relié au module matériel 3 par l'intermédiaire du port de sortie SDO1 (resp. du port d'entrée SDI1). La CPU 1 comprend en outre un registre 4' (respectivement 5') relié au module matériel 2 par l'intermédiaire du port de sortie SDO2 (resp. du port d'entrée SDI2).

L'écriture, commandée par la CPU 1, dans le registre 4 (resp. 4'), de données issues de la mémoire 6 a pour effet d'appliquer ces données écrites sur le port SDO1 (resp. SDO2). La CPU 1 peut alors commander l'écriture dans le registre 4 (resp. 4'), de nouvelles données issues de la mémoire 6 qui seront, elles aussi, appliquées sur le port SDO1 (resp. SDO2)..La lecture, commandée par la CPU 1, du registre 5 (respectivement 5') a pour effet de fournir les données alors appliquées sur le port SDI1 (resp. SDI2). L'écriture dans la mémoire 6 de ces données est ensuite commandée par la CPU 1.

Dans certains cas, un même port peut être utilisé pour la lecture et l'écriture.

Cette solution pour fournir les données en entrée et recueillir les données en sortie des modules matériels n'est pas adaptée à de gros volumes de données car elle requiert une participation importante de la CPU.

Dans d'autres configurations, chaque module matériel comprend un contrôleur de DMA qui lui est propre. Par exemple, le système « firmware » SP2 schématisé à la figure 2, comprend une CPU 7 et deux modules matériels 8 et 9. La CPU 7 pilote des accès à une mémoire externe 6 par l'intermédiaire de contrôleurs de DMA. Les modules matériels 8 et 9 comprennent en effet chacun un contrôleur de DMA 8' et 9. Le contrôleur de DMA de chaque module matériel permet ainsi de lire les données à traiter dans la mémoire de masse 6, puis une fois ces données traitées par le module matériel, d'écrire les données obtenues dans la mémoire de masse 6. Toutefois, cette solution accroît le coût des modules matériels. Elle constitue en outre un obstacle à la granularité des modules matériels. Par exemple, un module matériel comprenant un contrôleur de DMA réalise deux traitements successifs sur les données d'entrée, par exemple une interpolation temporelle et une interpolation spatiale de données d'images. Dans le cas où l'on souhaite le diviser en deux modules matériels, l'un réalisant l'interpolation temporelle, l'autre l'interpolation spatiale, afin que certaines données puissent subir un seul des deux traitements, il est alors nécessaire d'ajouter un contrôleur de DMA.

Le document US 2005/0177655 divulgue un dispositif comprenant un processeur central, une mémoire réinscriptible (RAM), un contrôleur de DMA, un dispositif périphérique, un dispositif accélérateur de hardware, et un bus de données. Le processeur central peut à la fois accéder directement à la mémoire, et au dispositif périphérique et au dispositif accélérateur de hardware via le bus de données. Le contrôleur de DMA est connecté à la mémoire et a accès au dispositif périphérique et au dispositif accélérateur de hardware via le bus de données. Les données peuvent ainsi être transférées entre la mémoire et le dispositif périphérique et le dispositif accélérateur de hardware via le bus de données, respectivement, via le contrôleur de DMA. Le contrôleur de DMA et le dispositif accélérateur de hardware et le dispositif accélérateur de hardware via le bus de données, respectivement, sont entre outre connectés via ce qu'il est appelé des lignes de requête hardware.

II existe donc un besoin pour une solution de fourniture des données d'entrée et de collecte des données en sortie des modules matériels d'un système sur puce de type firmware , réduisant les inconvénients de l'art antérieur.

A cet effet, suivant un premier aspect, l'invention propose un contrôleur de DMA d'un système sur puce, suivant la revendication 1

Un tel contrôleur de DMA permet ainsi d'échanger des données avec les modules matériels de traitement de données d'un système sur puce, en requérant une intervention minimum de la CPU. Aucune adresse de stockage n'est fournie par le contrôleur de DMA aux modules de traitement lors des échanges de données. L'invention permet de tirer avantageusement partie des fonctionnalités de lecture et/ou écriture de données, dans la mémoire locale, du contrôleur de DMA utilisé par la CPU. En cas de transmission au module matériel de traitement, les données lui sont transmises sans qu'il y ait d'opération d'écriture dans une quelconque mémoire du module matériel. En particulier, il n'y a pas fourniture, au module de traitement sélectionné pour le transfert, d'adresse de destination des données transmises traditionnellement associée à une opération d'écriture par l'intermédiaire d'un bus.

En cas de réception de données en provenance du module matériel de traitement, les données sont délivrées sans qu'il y ait d'opération de lecture dans une quelconque mémoire du module matériel. En particulier, il n'y a pas fourniture, au module de traitement sélectionné pour le transfert, d'adresse de source des données.

Dans un mode de réalisation, le contrôleur de DMA est adapté pour, sur réception d'au moins une commande en provenance de l'unité centrale indiquant des paramètres comprenant une adresse de stockage et une taille de données, lire successivement par l'intermédiaire de la première interface des données stockées en mémoire locale à des adresses déterminées en fonction desdits paramètres, et transmettre successivement les données lues au module de traitement par l'intermédiaire de la troisième interface.

Cette disposition permet de fournir au module de traitement un flot de données (par exemple les pixels d'une image entière) sans requérir d'intervention de la CPU, ce qui permet d'améliorer les performances du système sur puce et est particulièrement adapté au mode opérationnel des modules matériels dans un système de type « firmware ».

Avantageusement, le contrôleur de DMA est adapté pour, sur réception d'au moins une commande en provenance de l'unité centrale indiquant des paramètres comprenant une adresse de stockage et une taille de données, écrire successivement dans la mémoire locale, par l'intermédiaire de la première interface, les données délivrées par le module de traitement à des adresses déterminées en fonction desdits paramètres.

Cette disposition permet ainsi de recueillir un flot de données (par exemple les pixels d'une image entière) traitées par le module de traitement sans requérir d'intervention de la CPU, ce qui permet d'améliorer les performances du système sur puce et est particulièrement adapté au mode opérationnel des modules matériels dans un système de type « firmware ».

Dans un mode de réalisation, le contrôleur de DMA est adapté pour, sur réception d'au moins une commande en provenance de l'unité centrale indiquant une largeur de canal, régler la largeur d'au moins un canal d'échange de données entre la troisième interface et le module de traitement à ladite largeur indiquée. Cette caractéristique permet ainsi d'adapter la troisième interface aux spécificités du module matériel auquel elle est associée, comme cela sera explicité dans la description qui suit.

Dans un mode de réalisation, les données transmises comportent des données décrivant des pixels d'image, et des informations indiquant la position d'au moins un pixel dans une image, le traitement effectué par le module de traitement étant effectué en fonction desdites informations.

Ainsi le traitement des données d'images par le module matériel est effectué en fonction d'informations reçues avec ces données d'images.

Dans un mode de réalisation, le contrôleur de DMA comprend en outre une quatrième interface avec une mémoire externe au système sur puce, le contrôleur de DMA étant adapté pour effectuer des opérations d'écriture et de lecture de données dans la mémoire externe par l'intermédiaire de cette quatrième interface.

Ainsi des données lues dans la mémoire externe par le contrôleur de DMA peuvent être acheminées par l'intermédiaire de la mémoire locale du contrôleur de DMA vers le module de traitement, avec une intervention de la CPU réduite au minimum. De même, des données traitées par le module de traitement et délivrées au contrôleur de DMA peuvent être écrite en mémoire externe par le contrôleur de DMA.

Suivant un second aspect, l'invention propose un système sur puce comprenant une mémoire locale, une unité centrale, un module de traitement et un contrôleur de DMA suivant le premier aspect de l'invention.

Suivant un troisième aspect, l'invention propose un procédé d'échange de données avec un module de traitement d'un système sur puce comprenant en outre une mémoire locale, une unité centrale et un contrôleur de DMA, suivant la revendication 8.

D'autres caractéristiques et avantages de l'invention apparaîtront encore à la lecture de la description qui va suivre. Celle-ci est purement illustrative et doit être lue en regard des dessins annexés sur lesquels :
- la figure 3 est un système sur puce dans un mode de réalisation de l'invention ;
- la figure 4 représente des échanges entre un module matériel et le DMA du système sur puce représenté en figure 4 pour fournir des données au module matériel ;
- la figure 5 représente des échanges entre un module matériel et le DMA du système sur puce représenté en figure 4 pour recueillir des données en provenance du module matériel ;
- la figure 6 est un chronogramme illustrant la mise en oeuvre des échanges représentés en figures 4 et 5.

Sur la figure 3 est représenté un système sur puce SP3 dans un mode de réalisation de l'invention. Le système sur puce SP3 est un système de type firmware réalisant des traitements de données, dans le cas du présent exemple sont des données d'images. Il comprend une CPU 11, une mémoire locale 12, par exemple de type RAM, une pluralité de modules matériels HW dont deux seulement, référencés 13, 13', sont représentés et un contrôleur de DMA 15.

Le système sur puce SP3 est couplé à une mémoire externe 16 par l'intermédiaire d'un système d'interconnexion comprenant un bus central d'interconnexion 17 et trois canaux physiques de données ou d'adresses 18, 19,20.

Le bus central d'interconnexion 17 est un canal physique comprenant trois canaux logiques respectivement associés aux canaux physiques 18, 19, 20.

La RAM 12 comprend une partie de mémoire IMEM dans laquelle les instructions d'une application logicielle A sont stockées et une partie de mémoire DMEM dans laquelle des données d'images sont stockées. Dans un autre mode de réalisation, IMEM et DMEM sont deux mémoires séparées.

Le contrôleur de DMA 15 comporte un bloc 22 de configuration associé à la RAM 12, un bloc 21 de configuration associé à la mémoire externe 16, un module de transactions 40 entre la RAM 12 et la mémoire externe 16 et un module d'arbitrage 28.

Chaque bloc de configuration 21, 22 comporte un certain nombre de registres, parmi lesquels au moins un registre de source, un registre de destination et un registre de taille.

Le module de transactions 40 est adapté pour piloter des écritures de données en mémoire externe 16, par l'intermédiaire de blocs de commande 23, 24, 25 et en fonction d'informations contenues dans le bloc 21 de configuration associé à la mémoire externe, comprenant l'application de données ou d'adresses sur les canaux 18, 19, 20, pour fourniture au bus central d'interconnexion 17 et pour piloter la lecture de données en mémoire externe 16, comprenant l'extraction de données ou d'adresses appliquées sur les canaux 18, 19, 20 et en provenance de la mémoire externe 16.

Le module de transactions 40 est adapté en outre pour commander des écritures et des lectures de données dans la RAM 12, par l'intermédiaire des blocs de commande 23, 24, 25, en fonction d'informations contenues dans le bloc 22 de configuration associé à la RAM et du module d'arbitrage 28.

Certains des traitements d'image réalisés par le système sur puce SP3 sont réalisés par l'application logicielle A et d'autres traitements sont réalisés par les modules matériels HW.

Le module matériel HW 13 comporte par exemple, dans le cas considéré ici, des composants adaptés pour réaliser une opération de décalage des pixels dans les images, puis une opération de filtrage sur ces pixels une fois décalés. Le module matériel HW 13' comporte par exemple des composants adaptés pour réaliser une opération d'interpolation spatiale des pixels dans les images.

L'application logicielle A permet de réaliser un décodage MPEG et permet de commander des transferts au contrôleur et de commander et superviser les blocs matériels du système sur puce SP3, parmi lesquels les blocs matériels 13 et 13'.

Les données d'images stockées par les mémoires DMEM 12 et externe 16 sont des pixels d'images.

Le système sur puce SP3 a une architecture standard à N bits. Chaque adresse de la mémoire externe 16 ou de la DMEM 12 se présente sous la forme d'un nombre codé sur Nb bits. A chaque adresse sont stockées les données représentant un nombre np de pixels d'une image classés selon un ordre déterminé.

De façon connue en soi, lors de l'exécution d'instructions de l'application logicielle A, stockées dans la partie IMEM de la RAM 12 et commandant un transfert entre la mémoire externe 16 et la partie DMEM de la RAM 12, par l'exécution d'instructions de type STORE , par exemple, la CPU 11 requiert successivement, auprès du contrôleur de DMA 15 la mémorisation d'une adresse de source Ad_SRC du transfert dans un registre de source du bloc 21 de configuration de la mémoire externe 16, la mémorisation d'une adresse de destination Ad_DST dans un registre de destination du bloc 22 de configuration de la RAM 12 et enfin la mémorisation de la taille t du transfert dans le registre de taille de chacun des blocs de configuration 21 et 22.

Puis, la CPU 11 commande au contrôleur de DMA 15 le début du transfert. Le module de transactions 40 requiert auprès de la mémoire externe 16 la lecture des données figurant à l'adresse mémorisée Ad_SRC dans le registre de source du bloc 21 de configuration de la mémoire externe 16. Pour ce faire, il transmet à la mémoire externe 16 une commande de lecture ( READ ) ayant comme argument l'adresse mémorisée Ad_SRC, par l'intermédiaire d'un des canaux 18,19 ou 20.

Puis il transmet ensuite une commande de lecture similaire pour les données stockées à chacune des adresses située entre l'adresse Ad_SRC+1 et l'adresse Ad_SRC+t-1.

En réponse à cette commande, les données D_SRC stockées à l'adresse Ad_SRC et les données D_(SRC+1) à D_(SRC+t-1) stockées à chacune des adresses successives situées entre l'adresse Ad_SRC+1 et l'adresse Ad_SRC+t-1 sont appliquées successivement sur le bus central d'interconnexion 17 et recueillis par l'un des canaux physiques 18, 19, 20, sous le pilotage du module de transactions 40. Puis elles sont successivement fournies au module d'arbitrage 28 pour écriture dans la RAM 12. Par l'intermédiaire du module d'arbitrage 28, qui gère les conflits d'arbitrage entre plusieurs demandes d'écritures (et/ou de lectures dans d'autres cas) dans la RAM 12, des commandes d'écritures sont successivement transmises à la RAM 12. Chaque commande d'écriture a comme premier argument les données à stocker D_SRC+n, pour n compris entre 0 et t-1, et comme second argument l'adresse Ad_DST+n, à laquelle il convient de stocker ces données dans la RAM 12. L'adresse de référence Ad_DST a été définie dans le registre de destination du bloc 22 de configuration associé à la RAM.

Une fois que le transfert est achevé, le contrôleur de DMA 15 en avertit la CPU 11 par une interruption.

Comme le contrôleur de DMA 15 est adapté pour échanger des données avec la mémoire externe 16 à l'aide d'un bus physique 17 comportant trois canaux logiques, le contrôleur de DMA 15 est capable de gérer en parallèle 3 opérations de transfert avec la mémoire externe 16.

Le bloc 21 de configuration associé à la mémoire externe 16 comporte donc trois registres de source, trois registres de destination et trois registres de taille.

L'utilisation du contrôleur de DMA 15 permet ainsi de réaliser le transfert des données, sans intervention de la CPU pendant l'opération de transfert elle-même. La CPU peut donc poursuivre ses traitements en parallèle du transfert de données en cours.

Dans un mode de réalisation de l'invention, le contrôleur de DMA comporte en outre une pluralité de modules d'interface HW interfacés chacun avec un module matériel respectif.

Sur la figure 3 sont représentés les modules d'interface 29 et 29' interfacés respectivement avec les modules matériels 13 et 13'.

Des échanges, dans un mode de réalisation de l'invention, entre le module matériel 13 et le module d'interface 29 vont être décrits ci-dessous. Des échanges similaires sont mis en oeuvre entre les autres modules d'interfaces et les modules matériels qui leur sont respectivement associés.

Le module matériel 13 comporte 4 ports de réception req_in, next_valid_in, flag_ in et pixel_ in et 4 ports d'émission req_out, next_valid_out, flag_out et pixel_out, destinés aux échanges avec le contrôleur de DMA 15.

Le module d'interface 29 comporte un bloc 32 de configuration associé au module matériel 13, 4 ports de réception req_in', next_valid_in', flag_in' et pixel_in' et 4 ports d'émission req_out', next_valid_out', flag_ out' et pixel_ out'. Ces ports d'émission et de réception sont destinés aux échanges avec le module matériel 13. Le bloc 32 de configuration associé au module matériel 13 comporte un registre de taille.

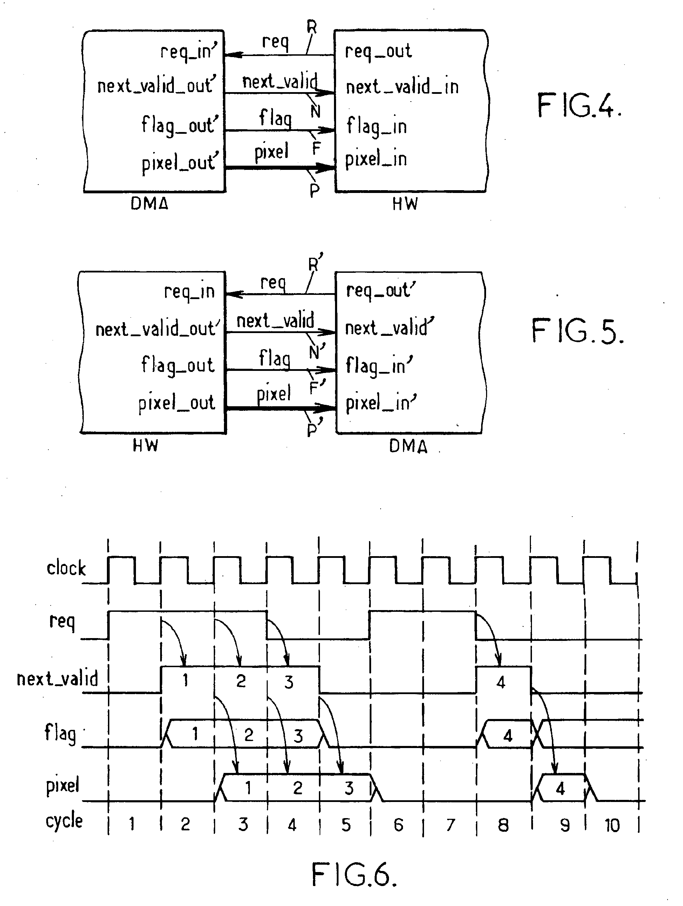

Comme représenté sur la figure 5, les ports de réception du module matériel 13 req_in, next_valid_in, flag_ in et pixel_ in sont reliés par des canaux respectifs R', N', F' et P' aux ports d'émission correspondant du module d'interface 29, respectivement req_out', next_valid_out', flag_out' et pixel_out'. Et comme représenté sur la figure 4, les ports de réception du module d'interface 29 req_in', next_valid_in', flag_in' et pixel_ in' sont reliés par des canaux respectifs R, N, F et P aux ports d'émission correspondant du module matériel 13, respectivement req_out, next_valid_out, flag_out et pixel_out.

Ces canaux d'échange de données sont dédiés aux échanges entre le module matériel 13 et le module d'interface 29.

Le module d'interface 29 est en outre adapté pour piloter la fourniture au module matériel 13 de données lues dans la RAM 12, par l'intermédiaire des blocs de commande 30, 31 et en fonction d'informations contenues dans le bloc 32 de configuration associé au module matériel 13.

Le module d'interface 29 est adapté en outre pour piloter la réception de données transmises par le module matériel 13 et l'écriture de ces données reçues dans la partie DMEM de la RAM 12, par l'intermédiaire des blocs de commande 23, 24, 25, du bloc 22 de configuration de RAM et du module d'arbitrage 28.

Ainsi lors de l'exécution d'instructions de l'application logicielle A, stockées dans la partie IMEM de la RAM 12 et commandant la réalisation par le module matériel 13 des traitements de décalage des pixels dans les images, puis de filtrage, la CPU 11 requiert successivement, auprès du contrôleur de DMA 15, la mémorisation d'une adresse de source Ad_SRC dans un registre de source du bloc 22 de configuration associé à la RAM 12 et la mémorisation de la taille T du transfert dans le registre de taille de chacun des blocs de configuration 22 et 32.

Puis, la CPU 11 commande au contrôleur de DMA 15 le début de la lecture du bloc de données de taille T stockées à partir de l'adresse Ad_SRC, la taille T et l'adresse Ad_SRC étant définies dans les registres de taille et de source du bloc de configuration 22, puis la transmission des données lues au module matériel 13.

Le module d'interface 29 requiert alors auprès du bloc d'arbitrage 28 la lecture des données figurant à l'adresse Ad_SRC dans la partie DMEM de la RAM 12. Pour ce faire, une commande de lecture (« READ ») ayant comme argument l'adresse mémorisée Ad_SRC est alors transmise à la RAM 12. Les données mémorisées à l'adresse Ad_SRC dans la RAM 12 sont alors lues.

En référence à la figure 4, la CPU ayant envoyé un signal demandant au module matériel 13 la réception des données et le traitement de ces données, un signal de requête « req » est transmis par le module matériel 13 depuis son port req_out (par exemple, par une mise à l'état haut du canal correspondant), indiquant qu'il est prêt à recevoir des données.

Cette requête est reçue par le module d'interface 29 sur son port req_in'. En réponse, le module d'interface 29 envoie un signal « next_valid » (par exemple, par une mise à l'état haut du canal correspondant) lui répondant qu'il est prêt à l'envoi des données, sur son port next_valid_out'. Le module matériel 13 reçoit ce signal sur son port next_valid_out.

Le module d'interface 29 envoie depuis son port d'émission flag_out', en parallèle de ce signal de réponse, des informations nommées ci-après « flag» relatives aux données à transmettre codées dans le cas présent sur 64 bits. Ces informations indiquent des caractéristiques des données à transmettre, relatives à leur position dans l'image : elles indiquent par exemple si les données prochainement transmises sont relatives à la première ou la dernière ligne de pixels dans une image, s'il s'agit du premier pixel ou du dernier pixel d'une ligne. Ces informations sont reçues par le module matériel 13 sur son port flag_in.

Le module d'interface 29 envoie ensuite depuis son port d'émission pixel_out' les données relatives au premier pixel, codées sur 8 bits, nommées « pixel » ci-après et contenues dans les données lues à l'adresse Ad_SRC relatives à nₚ pixels.

Ces données sont reçues par le module matériel 13 sur son port de réception pixel_in.

Une fois les données reçues, la même procédure d'échange est renouvelée nₚ -1 fois entre le module matériel 13 et le module d'interface 29 permettant la transmission pixel par pixel des nₚ pixels lus à l'adresse Ad_SRC.

Sur la figure 6 est représenté un chronogramme montrant la succession de signaux « req », « next_valid », « flag » et « pixel » émis cycle par cycle (un cycle d'horloge correspondant à une phase à l'état haut et une phase à l'état bas) et relatifs à la transmission des données relatives à quatre pixels successifs numérotés 1, 2, 3 et 4.

Le signal de requête émis au cycle n°6 pour le quatrième pixel n'ayant pas obtenu de réponse au cycle suivant (cycle n°7), le signal de requête est réitéré au 7ème cycle.

Le module d'interface 29 transmet ensuite des commandes successives de lecture dans la RAM 12 similaires à celle décrite ci-dessus, pour les données stockées à chacune des adresses situées entre l'adresse Ad_SRC+1 et l'adresse Ad_SRC+T-1. Chaque lecture est suivie de la transmission pixel par pixel au module matériel des données lues dans la RAM 12. La transmission s'achève lorsque T blocs de données de pixels, T étant défini dans le registre de taille du bloc 32 de configuration associé au module matériel 13, ont été transmis. Une fois que le transfert est achevé, le module d'interface 29 en avertit la CPU 11 par une interruption.

Les données ainsi reçues successivement par le module matériel sont alors soumises aux opérations de décalage et de filtrage réalisées par le module matériel 13. Ces opérations sont réalisées notamment en fonction des informations « flag » transmises sur le canal F.

Ainsi les données lues dans la RAM 12 sont transmises par le contrôleur de DMA 15 au module matériel 13, et ce sans qu'une commande d'écriture, avec fourniture d'une adresse de destination pour écrire ces données, ne soit fournie par le contrôleur de DMA 15 au module matériel 13.

Ceci permet d'alimenter le module matériel 13 avec des données à traiter, lues dans la RAM 12. Ces données ont par exemple été précédemment extraites de la mémoire externe 16 dans le cadre d'un transfert DMA classique opéré depuis la mémoire externe 16 vers la RAM 12.

Cette alimentation en données du module matériel requiert la consommation de très peu de ressources de traitement de la CPU 11.

Une fois que des données ont été traitées par le module matériel 13, c'est-à-dire qu'elles ont été soumises aux opérations de décalage et de filtrage opérées par le module matériel, ce dernier en avertit la CPU 11, par exemple par une interruption.

La réception de cette interruption par la CPU 11 provoque l'exécution d'instructions de l'application logicielle A, stockées dans la partie IMEM de la RAM 12, suite auxquelles la CPU requiert alors successivement, auprès du contrôleur de DMA 15, la mémorisation d'une adresse de source Ad_DST dans un registre de destination du bloc 22 de configuration associé à la RAM 12 et la mémorisation de la taille T du transfert dans le registre de taille de chacun des blocs de configuration 22 et 32.

Puis, la CPU commande au module matériel 13 le début de la transmission de l'ensemble des données traitées.

Sur commande de la CPU, et en référence à la figure 5, un signal de requête « req » est transmis par le module d'interface 29 depuis son port req_out' (par exemple, par une mise à l'état haut du canal), indiquant qu'il est prêt à recevoir des données.

Cette requête « req » est reçue par le module matériel 13 sur son port req_in. En réponse, le module matériel 13 envoie, depuis son port next_valid_out, un signal « next_valid » indiquant qu'il est prêt pour l'envoi des données. Le module d'interface 29 reçoit ce signal sur son port next_valid_in'.

Le module matériel 13 envoie depuis son port d'émission flag_out, en parallèle de ce signal de réponse, des informations « flag » relatives aux données à transmettre codées dans le cas présent sur 64 bits, par exemple des informations indiquant si les données prochainement transmises sont relatives à la première ou la dernière ligne de pixels dans une image, s'il s'agit du premier pixel ou du dernier pixel d'une ligne. Ces informations sont reçues par le module d'interface 29 sur son port flag_in'. Le module matériel 13 envoie ensuite depuis son port d'émission pixel_out les données « pixel » relatives au premier pixel traité, codées sur 8 bits.

Ces données sont reçues par le module d'interface 29 sur son port de réception pixel_in'.

Une fois les données reçues, la même procédure d'échange est renouvelée, tant qu'il reste des données traitées à envoyer, c'est-à-dire, (nₚ-1 +(T-1)*nₚ) fois entre le module matériel 13 et le module d'interface 29, (T étant défini dans le registre de taille du bloc 32 de configuration associé au module matériel 13), permettant au total la transmission pixel par pixel de T*n pixels.

Une fois qu'il a reçu les données traitées relatives à n premiers pixels, le module d'interface 29 requiert alors auprès du bloc d'arbitration 28 l'écriture, dans la partie DMEM de la RAM 12, de ces données à l'adresse Ad_DST, telle que définie dans le registre de destination dans le bloc de configuration 22. Pour ce faire, une commande d'écriture (« WRITE ») ayant comme argument l'adresse Ad_DST est alors transmise à la RAM 12. Les données traitées relatives aux n pixels sont alors mémorisées à l'adresse Ad_DST dans la RAM 12.

Puis ces étapes de recueil de données relatives à n pixels et d'écriture de ces données dans la RAM 12 est réitérée T-1 fois, T étant définie dans le registre de taille du bloc 22 de configuration associé à la RAM afin de procéder à l'enregistrement des données dans la RAM 12 aux adresses situées entre Ad_DST et Ad_DST+T-1.

Une fois que le transfert est achevé, le module d'interface 29 en avertit la CPU 11 par une interruption.

Comme on le voit, les données traitées par le module matériel 13 sont ainsi transmises par le contrôleur de DMA 15 et écrites dans la RAM 12, et ce sans qu'une commande de lecture, avec fourniture d'une adresse de source indiquant où lire ces données dans une mémoire du module matériel 13, ne soit fournie à ce dernier par le contrôleur de DMA 15.

Ceci permet de recueillir les données traitées par le module matériel 13 et de les stocker en RAM 12. Un transfert DMA classique opéré depuis la RAM 12 vers la mémoire externe 16 pourra ensuite décharger la RAM 12.

Un tel contrôleur de DMA permet d'alimenter en données une pluralité de modules matériels. La sélection du module matériel avec lequel un échange de données est à opérer est faite implicitement par la CPU, lorsqu'elle renseigne des registres dans le bloc de configuration associé audit module matériel.

Un tel contrôleur de DMA peut s'adapter facilement à un nombre variable de modules matériels, puisqu'il suffit d'ajouter si nécessaire des modules d'interface ou de connecter les ports d'émission et réception d'une même interface à plusieurs modules matériels.

Dans un mode de réalisation de l'invention, le contrôleur de DMA comprend 1 ou plusieurs modules physiques d'interface HW.

Et un module d'interface HW physique dans le système sur puce peut constituer de 1 jusqu'à n modules logiques d'interface (par exemple n=4). Chaque module logique comprend d'une part un bloc de configuration associé à un module matériel dédié et les registres de ce bloc et d'autre part les ports d'émission et/ou de réception destinés à être interfacés avec des modules matériels. Le nombre maximal n de modules logiques est déterminé lors de l'implémentation matérielle du système. Les modules logiques effectivement utilisés sont indiqués par la CPU dans le cadre de l'exécution de l'application logicielle A et les registres du bloc de configuration dans chaque module logique ainsi indiqué doivent alors être renseignés. Chaque module d'interface logique joue alors le rôle de l'un des modules d'interface HW du type des modules d'interface 29 ou 29' décrits ci-dessus. Les ressources adaptées pour échanger avec les modules matériels du module d'interface HW physique sont alors réparties dans le temps entre les différents modules d'interface logique, chaque module d'interface logique bénéficiant desdites ressources pendant un temps déterminé, pour échanger avec le module matériel auquel il est dédié.

Cette disposition permet d'adapter le contrôleur de DMA en fonction des instructions à exécuter par la CPU 11.

Dans un mode de réalisation de l'invention, dans un module d'interface du type du module d'interface 29 par exemple, le bloc de configuration associé au module matériel comprend un registre de configuration du canal P reliant les ports pixel_in et pixel_out', et/ou un registre de configuration du canal P' reliant les ports pixel_in' et pixel_out, destinés à transporter les données représentatives des pixels. Et la CPU est adaptée pour mémoriser dans au moins un de ces registres, par exemple le registre de configuration du canal P, une valeur fixant la largeur du canal P (typiquement 8, 16, 32 ou 64 bits) avant chaque transfert commandé par la CPU en vue de transmettre au module matériel 13.

Une telle disposition permet de faire cohabiter dans un même système un premier module matériel fournissant à un premier module d'interface HW qui lui est associé des données codant chaque pixel sur un byte par exemple, et un second module matériel fournissant à un second module d'interface HW qui lui est associé des données codant chaque pixel sur 32 bits par exemple. Cette disposition est particulièrement utile pour s'adapter aux formats de sortie ou d'entrée des données utilisées dans les modules matériels, dans le cas où le premier module d'interface et le second module d'interface sont deux émanations logiques d'un même module d'interface physique.

Cette disposition permet également de s'adapter au cas où l'application logicielle commande d'envoyer des données à un module matériel pour un premier traitement et commande par ailleurs d'envoyer des données au même module matériel pour un second traitement, le module matériel étant adapté pour recevoir en entrée des mots de 8 bits dans le cas du premier traitement et des mots de 32 bits dans le cas du second traitement.

Dans le mode de réalisation décrit en référence aux figures, le module d'interface 29 est adapté pour recevoir des données en provenance du module matériel 13 et pour transmettre des données au module matériel 13. Dans un mode de réalisation, le module d'interface 29 n'est adapté pour réaliser que l'une de ces deux opérations.

L'invention permet en outre d'échanger des données, par exemple des données d'image, entre un système « firmware », par exemple le système SP3 décrit ci-dessus, et un module matériel externe au système SP3 et présentant un protocole de communication similaire à celui présenté par le module d'interface matériel 29 (dans le cas ci-dessus, avec les échanges de signaux « req », « next_valid », « flag » et « pixel »), les échanges ayant lieu entre le module d'interface matériel 29 du contrôleur de DMA du système « firmware » et le module matériel externe.

L'invention permet en outre d'échanger des données, par exemple des données d'image, entre un premier système « firmware » et un second système « firmware », les échanges ayant lieu entre deux modules d'interface matériel similaire au module d'interface 29, compris chacun dans le contrôleur de DMA de chaque système « firmware ».

L'invention permet également de mettre en cascade, dans une chaîne de traitement de données, un premier module matériel HW1 dont la sortie est reliée à l'entrée d'un système de type « firmware » SP tel que décrit ci-dessus, dont le sortie est reliée à un second module matériel HW2. Le flux de données est d'abord reçu en entrée de la chaîne par l'entrée du premier module matériel HW1.

Dans un tel cas, le contrôleur de DMA comporte un premier module d'interface associé au module matériel HW1, et un second module d'interface associé au second module matériel HW2.

Dans un mode de réalisation de l'invention, le premier module d'interface, interfacé avec le module matériel HW 1, comprend uniquement les ports de réception similaires aux ports req_in', next_valid_in', flag_ in' et pixel_ in', et pas de ports d'émission, puisqu'il est destiné uniquement à recevoir des données en provenance du module HW1 et non à lui transmettre des données. Et le second module d'interface, interfacé avec le module matériel HW2, comprend uniquement des ports d'émission similaires aux ports d'émission req_out', next_valid_out', flag_ out' et pixel_ out', et pas de ports de réception.

Dans un mode de réalisation, la fourniture des données par le premier module HW1 au système de type « firmware » SP est mise en oeuvre par l'intermédiaire d'un contrôleur de DMA du système SP, et la fourniture des données par ce système SP au module matériel HW2 est mise en oeuvre par l'intermédiaire du contrôleur de DMA du système SP, des traitements intermédiaires pouvant être réalisés par le système SP sur les données reçues en provenance du premier module matériel HW1.

## Revendications

1. Contrôleur de DMA (15) d'un système sur puce (SP3), comprenant :
- une première interface (28, 22, 40) avec une mémoire locale (12) du système sur puce adaptée pour assurer des transmissions de données vers et en provenance de la mémoire locale, lesdites transmissions étant associées à une indication à la mémoire locale d'une adresse en mémoire locale ;
- une seconde interface avec une unité centrale (11) du système sur puce ; ledit contrôleur de DMA étant adapté pour effectuer, en réponse à une commande reçue de l'unité centrale, des opérations d'écriture et de lecture de données dans la mémoire locale par l'intermédiaire de la première interface ;
ledit contrôleur de DMA comprenant en outre au moins une troisième interface (29) avec un module (13) de traitement de données du système sur puce,
**caractérisé en ce que** la troisième interface étant adaptée pour transmettre, à destination du module de traitement (13), des données lues par l'intermédiaire de la première interface dans la mémoire locale, la transmission étant pilotée en fonction d'informations contenues dans un bloc de configuration (32) de ladite troisième interface associé à un module de traitement (13) mais n'étant pas associée à une indication au dit module de traitement, par le contrôleur de DMA, d'adresse de stockage desdites données ;
et/ou **en ce que** ladite troisième interface est adaptée pour recevoir des données délivrées par le module de traitement (13) et pour transmettre à la mémoire locale (12) les données reçues par l'intermédiaire de la première interface (28, 22, 40), ladite réception étant pilotée en fonction d'informations contenues dans le bloc de configuration mais n'étant pas associée à une indication préalable au dit module de traitement, par le contrôleur de DMA, d'adresse de stockage desdites données.

2. Contrôleur de DMA (15) selon la revendication 1, adapté pour, lorsque la troisième interface est adaptée pour transmettre, à destination du module de traitement, des données, sur réception d'au moins une commande en provenance de l'unité centrale (11) indiquant des paramètres comprenant une adresse de stockage et une taille de données, lire successivement par l'intermédiaire de la première interface (28, 22, 40) des données stockées en mémoire locale (12) à des adresses déterminées en fonction desdits paramètres, et transmettre successivement les données lues au module de traitement (13) par l'intermédiaire de la troisième interface (29),

3. Contrôleur de DMA (15) selon l'une quelconque des revendications précédentes, adapté pour, lorsque la troisième interface est adaptée pour recevoir des données délivrées par le module de traitement, sur réception d'au moins une commande en provenance de l'unité centrale (11) indiquant des paramètres comprenant une adresse de stockage et une taille de données, écrire successivement dans la mémoire locale (12), par l'intermédiaire de la première interface (28, 22, 40), les données délivrées par le module de traitement (13) à des adresses déterminées en fonction desdits paramètres.

4. Contrôleur de DMA (15) selon l'une des revendications précédentes, adapté pour, sur réception d'au moins une commande en provenance de l'unité centrale (11) indiquant une largeur de canal, régler la largeur d'au moins un canal d'échange de données entre la troisième interface (29) et le module de traitement (13) à ladite largeur indiquée.

5. Contrôleur de DMA (15) selon l'une des revendications précédentes, dans lequel les données transmises comportent des données décrivant des pixels d'image, et des informations indiquant la position d'au moins un pixel dans une image, le traitement effectué par le module de traitement (13) étant effectué en fonction desdites informations.

6. Contrôleur de DMA (15) selon l'une des revendications précédentes, comprenant en outre une quatrième interface avec une mémoire externe (16) au système sur puce (SP3), le contrôleur de DMA étant adapté pour effectuer des opérations d'écriture et de lecture de données dans la mémoire externe par l'intermédiaire de la quatrième interface.

7. Système sur puce (SP3) comprenant : - une mémoire locale (12); - une unité centrale (11); - un module de traitement (13) ; et - un contrôleur de DMA (15) selon l'une quelconque des revendications précédentes.

8. Procédé d'échange de données avec un module de traitement (13) dans un système sur puce (SP3) comprenant en outre une mémoire locale (12), une unité centrale (11) et un contrôleur de DMA (15), le contrôleur de DMA comprenant une première interface (28, 22, 40) avec la mémoire locale adaptée pour assurer des transmissions de données, vers et en provenance de la mémoire locale, lesdites transmissions étant associées à une indication à la mémoire locale d'une adresse en mémoire locale ;
une seconde interface avec l'unité centrale, et étant adapté pour effectuer, en réponse à une commande reçue de l'unité centrale, des opérations d'écriture et de lecture de données dans la mémoire locale par l'intermédiaire de la première interface ; et
au moins une troisième interface (29) avec le module (13) de traitement ;
ledit procédé étant **caractérisé en ce qu'**il comprend au moins l'une des deux étapes a/, b/ suivantes :
a/ transmettre depuis la troisième interface du contrôleur de DMA, à destination du module de traitement, des données lues par la première interface du contrôleur de DMA dans la mémoire locale, la transmission étant pilotée en fonction d'informations contenues dans un bloc de configuration (32) de ladite troisième interface associé à un module de traitement (13) mais n'étant pas associée à une indication, au module de traitement par le contrôleur de DMA, d'adresse de stockage desdites données;
b/ recevoir au niveau de la troisième interface des données transmises par le module de traitement (13) et fournir par la troisième interface à la première interface (28, 22, 40) des données reçues afin d'écrire les données reçues dans la mémoire locale (12), ladite réception des données transmises étant pilotée en fonction d'informations contenues dans le bloc de configuration mais n'étant pas associée à une indication préalable au module de traitement, par le contrôleur de DMA (15), d'adresse de stockage desdites données.

9. Procédé selon la revendication 8, comprenant les étapes suivantes, en cas de transmission depuis la troisième interface du contrôleur de DMA, à destination du module de traitement : - suite à réception par le contrôleur de DMA (15) d'au moins une commande en provenance de l'unité centrale (11) indiquant des paramètres comprenant une adresse de stockage et une taille, lire successive par l'intermédiaire de la première interface (28, 22, 40) des données stockées à des adresses en mémoire locale (12) déterminées en fonction desdits paramètres ; et - transmettre successive les données lues au module de traitement (13) par l'intermédiaire de la troisième interface (29).

10. Procédé selon la revendication 8 ou la revendication 9, comprenant l'étape suivante, en cas de réception par la troisième interface, de données transmises par le module de traitement : - suite à réception d'au moins une commande en provenance de l'unité centrale (11) indiquant des paramètres comprenant une adresse de stockage et une taille, écrire successivement, par l'intermédiaire de la première interface (28, 22, 40), des données transmises par le module de traitement (13) à des adresses en mémoire locale (12) déterminées en fonction desdits paramètres.

## Claims

1. DMA controller (15) of a system on chip (SP3), comprising:
- a first interface (28, 22, 40) with a local memory (12) of the system on chip designed to handle data transmissions to and from the local memory, said transmissions being associated with an indication to the local memory of an address in local memory;
- a second interface with a central processing unit (11) of the system on chip;
said DMA controller being designed to perform, in response to a command received from the central processing unit, operations for writing and reading data in the local memory via the first interface;
said DMA controller also comprising at least one third interface (29) with a data processing module (13) of the system on chip,
said third interface being designed to transmit, to the processing module, data read via the first interface in the local memory, the transmission not being associated with an indication to the processing module, by the DMA controller, of a storage address of said data;
and/or said third interface being designed to receive data delivered by the processing module (13) and to transmit to the local memory (12) the data received via the first interface (28, 22, 40), said reception not being associated with a prior indication to the processing module, by the DMA controller, of the storage address of said data.

2. DMA controller (15) according to Claim 1, designed, when the third interface is designed to transmit data to the processing module on receipt of at least one command from the central processing unit (11) indicating parameters including a storage address and a data size, to read successively via the first interface (28, 22, 40) data stored in local memory (12) at addresses determined as a function of said parameters, and to transmit successively the read data to the processing module (13) via the third interface (29).

3. DMA controller (15) according to any one of the preceding claims, designed, when the third interface is designed to receive data delivered by the processing module, on receipt of at least one command from the central processing unit (11) indicating parameters including a storage address and a data size, to write successively into the local memory (12), via the first interface (28, 22, 40), the data delivered by the processing module (13) at addresses determined according to said parameters.

4. DMA controller (15) according to one of the preceding claims, designed, on receipt of at least one command from the central processing unit (11) indicating a channel width, to adjust the width of at least one data interchange channel between the third interface (29) and the processing module (13) to said indicated width.

5. DMA controller (15) according to one of the preceding claims, in which the transmitted data includes data describing image pixels and information indicating the position of at least one pixel in an image, the processing performed by the processing module (13) being performed as a function of said information.

6. DMA controller (15) according to one of the preceding claims, also comprising a fourth interface with a memory (16) external to the system on chip (SP3), the DMA controller being designed to perform operations to write and read data in the external memory via the fourth interface.

7. System on chip (SP3) comprising:
- a local memory (12);
- a central processing unit (11);
- a processing module (13); and
- a DMA controller (15) according to any one of the preceding claims.

8. Data interchange method with a processing module (13) in a system on chip (SP3) also comprising a local memory (12), a central processing unit (11) and a DMA controller (15),
the DMA controller comprising a first interface (28, 22, 40) with the local memory designed to handle data transmissions to and from the local memory, said transmissions being associated with an indication to the local memory of an address in local memory;
a second interface with the central processing unit, and being designed to perform, in response to a command received from the central processing unit, operations to write and read data in the local memory via the first interface; and
at least one third interface (29) with the processing module (13);
said method comprising at least one of the following two steps a/, b/:
a/ transmitting from the third interface of the DMA controller, to the processing module, data read via the first interface of the DMA controller in the local memory, the transmission not being associated with an indication, to the processing module by the DMA controller, of a storage address of said data;
b/ receiving on the third interface data transmitted by the processing module (13) and supplying via the third interface to the first interface (28, 22, 40) received data in order to write the received data in the local memory (12), said reception of the transmitted data not being associated with a prior indication to the processing module, by the DMA controller (15), of a storage address of said data.

9. Method according to Claim 8, comprising the following steps, in the case of transmission from the third interface of the DMA controller to the processing module:
- following reception by the DMA controller (15) of at least one command from the central processing unit (11) indicating parameters including a storage address and a size, successively reading via the first interface (28, 22, 40) data stored at addresses in local memory (12) determined as a function of said parameters; and
- successively transmitting the read data to the processing module (13) via the third interface (29).

10. Method according to Claim 8 or Claim 9, comprising the following step, in the case of reception by the third interface, of data transmitted by the processing module:
- following reception of at least one command from the central processing unit (11) indicating parameters including a storage address and a size, successively writing, via the first interface (28, 22, 40), data transmitted by the processing module (13) at addresses in local memory (12) determined as a function of said parameters.

## Patentansprüche

1. DMA-Steuervorrichtung (15) eines Chipsystems (SP3) mit:
- einer ersten Schnittstelle (28, 22, 40) mit einem lokalen Speicher (12) des Chipsystems, die angepasst ist, um Datenübertragungen zu und von dem lokalen Speicher sicherzustellen, wobei die Übertragungen mit einer Angabe an den lokalen Speicher einer Adresse in dem lokalen Speicher verbunden sind;
- einer zweiten Schnittstelle mit einer Zentraleinheit (11) des Chipsystems, wobei die DMA-Steuervorrichtung angepasst ist, um im Ansprechen auf einen von der Zentraleinheit empfangenen Befehl Schreib- und Leseoperationen von Daten in dem lokalen Speicher über den Vermittler der ersten Schnittstelle auszuführen,
wobei die DMA-Steuervorrichtung ferner zumindest eine dritte Schnittstelle (29) mit einem Datenverarbeitungsmodul (13) des Chipsystems aufweist;
**dadurch gekennzeichnet, dass**
die dritte Schnittstelle angepasst ist, um an einen Bestimmungsort des Verarbeitungsmoduls (13) über den Vermittler der ersten Schnittstelle in dem lokalen Speicher gelesene Daten zu übertragen, wobei die Übertragung durch die DMA-Steuervorrichtung entsprechend Informationen durchgeführt wird, die in einem Konfigurationsblock (32) der dritten Schnittstelle enthalten sind, der mit einem Verarbeitungsmodul (13) verbunden ist, aber nicht mit einer Angabe einer Speicheradresse der Daten an das Verarbeitungsmodul verbunden ist; und/oder
die dritte Schnittstelle angepasst ist, um durch das Verarbeitungsmodul (13) übergebene Daten zu empfangen, und um die durch den Vermittler der ersten Schnittstelle (28, 22, 40) empfangenen Daten an den lokalen Speicher (12) zu übertragen, wobei der Empfang durch die DMA-Steuervorrichtung entsprechend Informationen durchgeführt wird, die in dem Konfigurationsblock enthalten sind, aber nicht mit einer vorherigen Angabe einer Speicheradresse der Daten an das Verarbeitungsmodul verbunden ist.

2. DMA-Steuervorrichtung (15) nach Anspruch 1, die angepasst ist, um, wenn die dritte Schnittstelle angepasst ist, um an einen Bestimmungsort des Verarbeitungsmoduls Daten auf einen Empfang von zumindest einem Befehl von der Zentraleinheit (11), der Parameter anzeigt, die eine Speicheradresse und eine Datengröße umfassen, zu übertragen, sukzessive über den Vermittler der ersten Schnittstelle (28, 22, 40) Daten, die in dem lokalen Speicher (12) an Adressen gespeichert sind, die entsprechend den Parametern bestimmt werden, zu lesen, und sukzessive die gelesenen Daten an das Verarbeitungsmodul (13) über den Vermittler der dritten Schnittstelle (29) zu übertragen.

3. DMA-Steuervorrichtung (15) nach einem der vorstehenden Ansprüche, die angepasst ist, um, wenn die dritte Schnittstelle angepasst ist, um durch das Verarbeitungsmodul übergebene Daten auf einen Empfang von zumindest einem Befehl von der Zentraleinheit (11), der Parameter anzeigt, die eine Speicheradresse und eine Datengröße anzeigen, zu empfangen, sukzessive in den lokalen Speicher (12) über den Vermittler der ersten Schnittstelle (28, 22, 40) die durch das Verarbeitungsmodul (13) übergebenen Daten an entsprechend den Parametern bestimmte Adressen zu schreiben.

4. DMA-Steuervorrichtung (15) nach einem der vorstehenden Ansprüche, die angepasst ist, um auf einen Empfang von zumindest einem Befehl von der Zentraleinheit (11), der eine Kanalbreite anzeigt, die Breite von zumindest einem Datenaustauschkanal zwischen der dritten Schnittstelle (29) und dem Verarbeitungsmodul (13) auf die angezeigte Breite zu regeln.

5. DMA-Steuervorrichtung (15) nach einem der vorstehenden Ansprüche, wobei die übertragenen Daten Bildpixel beschreibende Daten und die Position von zumindest einem Pixel in einem Bild anzeigende Informationen aufweisen, wobei die durch das Verarbeitungsmodul (13) ausgeführte Verarbeitung entsprechend den Informationen ausgeführt wird.

6. DMA-Steuervorrichtung (15) nach einem der vorstehenden Ansprüche, ferner mit einer vierten Schnittstelle mit einem externen Speicher (16) an dem Chipsystem (SP3), wobei die DMA-Steuervorrichtung angepasst ist, um Schreib- und Leseoperationen von Daten in dem externen Speicher über den Vermittler der vierten Schnittstelle auszuführen.

7. Chipsystem (SP3) mit:
- einem lokalen Speicher (12);
- einer Zentraleinheit (11);
- einem Verarbeitungsmodul (13); und
- einer DMA-Steuervorrichtung (15) nach einem der vorstehenden Ansprüche.

8. Verfahren zum Austauschen von Daten mit einem Verarbeitungsmodul (13) in einem Chipsystem (SP3) mit zumindest einem lokalen Speicher (12), einer Zentraleinheit (11) und einer DMA-Steuervorrichtung (15), wobei die DMA-Steuervorrichtung Folgendes aufweist:
eine erste Schnittstelle (28, 22, 40) mit dem lokalen Speicher, die angepasst ist, um Datenübertragungen zu und von dem lokalen Speicher sicherzustellen, wobei die Übertragungen mit einer Angabe an den lokalen Speicher einer Adresse in dem lokalen Speicher verbunden sind;
eine zweite Schnittstelle mit der Zentraleinheit, wobei die DMA-Steuervorrichtung angepasst ist, um im Ansprechen auf einen von der Zentraleinheit empfangenen Befehl Schreib- und Leseoperationen von Daten in dem lokalen Speicher über den Vermittler der ersten Schnittstelle auszuführen; und
zumindest eine dritte Schnittstelle (29) mit dem Verarbeitungsmodul (13);
**dadurch gekennzeichnet, dass** das Verfahren zumindest einen der beiden Schritte a), b) aufweist:
a) Übertragen von der dritten Schnittstelle der DMA-Steuervorrichtung an einen Bestimmungsort des Verarbeitungsmoduls von über die erste Schnittstelle der DMA-Steuervorrichtung in dem lokalen Speicher gelesenen Daten, wobei die Übertragung an das Verarbeitungsmodul durch die DMA-Steuervorrichtung entsprechend Informationen durchgeführt wird, die in einem Konfigurationsblock (32) der dritten Schnittstelle enthalten sind, der mit einem Verarbeitungsmodul (13) verbunden ist, aber nicht mit einer Angabe einer Speicheradresse der Daten verbunden ist;
b) Empfangen an der dritten Schnittstelle von durch das Verarbeitungsmodul (13) übertragenen Daten, und Besorgen über die dritte Schnittstelle an der ersten Schnittstelle (28, 22, 40) von empfangenen Daten, um die empfangenen Daten in den lokalen Speicher (12) zu schreiben, wobei der Empfang von übertragenen Daten durch die DMA-Steuervorrichtung (15) entsprechend Informationen durchgeführt wird, die in dem Konfigurationsblock enthalten sind, aber nicht mit einer vorherigen Angabe einer Speicheradresse der Daten an das Verarbeitungsmodul verbunden ist.

9. Verfahren nach Anspruch 8 mit den folgenden Schritten im Falle einer Übertragung von der dritten Schnittstelle der DMA-Steuervorrichtung an einen Bestimmungsort des Verarbeitungsmoduls:
- sukzessives Lesen über den Vermittler der ersten Schnittstelle (28, 22, 40) von an Adressen in dem lokalen Speicher gespeicherten Daten, die entsprechend Parametern bestimmt werden, im Anschluss an einen Empfang durch die DMA-Steuervorrichtung (15) von zumindest einem Befehl von der Zentraleinheit (11), der die Parameter anzeigt, die eine Speicheradresse und eine Größe aufweisen; und
- sukzessives Übertragen der gelesenen Daten an das Verarbeitungsmodul (13) über den Vermittler der dritten Schnittstelle (29).

10. Verfahren nach Anspruch 8 oder 9, mit dem folgenden Schritt im Falle eines Empfangs über die dritte Schnittstelle von durch das Verarbeitungsmodul übertragenen Daten:
- sukzessives Schreiben über den Vermittler der ersten Schnittstelle (28, 22, 40) von durch das Verarbeitungsmodul (13) übertragenen Daten an Adressen in dem lokalen Speicher (12), die entsprechend Parametern bestimmt werden, im Anschluss an einen Empfang von zumindest einem Befehl von der Zentraleinheit (11), der die Parameter anzeigt, die eine Speicheradresse und eine Größe aufweisen.
